# EUROPEAN PATENT APPLICATION

(11) **EP 4 604 345 A1**
(43) Date of publication of application: **20.08.2025**
(21) Application number: 25156761.6
(22) Date of filing: 10.02.2025
(51) Int. Cl.: H02J 3/00, H02J 3/14, H02J 3/32, H02J 4/00

(54) **FUEL CELL SYSTEM ARCHITECTURE FOR ARTIFICIAL INTELLIGENCE MODEL TRAINING**

(30) Priority: 12.02.2024 US 202463552639 P; 03.05.2024 US 202463642570 P
(71) Applicant: Bloom Energy Corporation, San Jose, CA 95134 (US)
(72) Inventor: PMSVVSV, Prasad, San Jose, CA 95134 (US); GURUNATHAN, Ranganathan, San Jose, CA 95134 (US); PANATI, Razvan, San Jose, CA 95134 (US); COTTULI, Carlton, San Jose, CA 95134 (US); PRASHER, Ravi, San Jose, CA 95134 (US); SRIDHAR, KR, San Jose, CA 95134 (US)
(74) Representative: Hoffmann Eitle

(57) **Abstract**

The present disclosure is directed to a system that employs fuel cell-based power generation for decentralized data centers that perform large, processing intensive tasks, such as training processes for large artificial intelligence models. The system utilizes various modules, such as energy storage systems, load banks, and other types of loads, to supplement power output by the fuel cells, as well as store any excess power generated by the fuel cell systems. As a result, swings in the power output by the fuel cell systems are minimized and the life of the fuel cell systems may be extended.

## Description

### BACKGROUND

### Technical Field

The present disclosure is directed to system architectures and power control methods for fuel cell systems.

### Description of the Related Art

Fuel cells, such as solid oxide fuel cells (SOFC), are energy conversion devices that can produce electricity and heat directly from hydrogen and hydrocarbon gases combined with oxidants. Fuel cell systems are capable of generating power continuously without interruption. Fuel cell systems are highly efficient compared to conventional power generation devices. For instance, in a diesel generator, diesel fuel and compressed air are ignited, converting the chemical energy of the fuel to thermal energy; thermal energy is then transformed to mechanical energy (e.g., using heat to drive a turbine); and mechanical energy is finally converted to electrical energy. In contrast, fuel cell systems bypass the conversion of mechanical energy into electrical energy. Instead, fuel cells generate electricity and heat via an electrochemical reaction, contributing to clean baseload power and serving as a backup solution.

Due to these advantages, fuel cell systems are desirable as a primary power source for various applications seeking reliable, sustainable, clean energy. Fuel cell systems can be used to power decentralized data centers that perform large, processing intensive tasks, such as training processes for artificial intelligence (AI) models.

### BRIEF SUMMARY

The present disclosure is directed to a system that employs fuel cell-based power generation for decentralized data centers performing large, intermittent processing intensive tasks.

The system utilizes various supporting modules and technologies that cater to the power load demand on the fuel cell power modules. In cases where the fuel cell power modules are unable to ramp up or increase at the same rate as the power load demands, additional energy is provided by one or more of an energy storage system, a load bank, and/or a secondary load (*e.g.,* a utility power grid or another connected microgrid). Conversely, in cases where the fuel cell power modules generate excess power, the excess power is provided to one or more of the energy storage system, the load bank, and the secondary load.

As a result, swings in the power output by the fuel cell power modules may be selectively minimized and the life of the fuel cell power modules may be extended.

### BRIEF DESCRIPTION OF THE SEVERAL VIEWS OF THE DRAWINGS

In the drawings, identical reference numbers identify similar features or elements. The size and relative positions of features in the drawings are not necessarily drawn to scale.
Figure 1 shows a power signal that indicates power consumption during training and checkpoints for a model training process according to an embodiment disclosed herein.
Figure 2 shows a power signal that indicates power consumption during a software crash and recovery, and a stand-by state for a model training process according to an embodiment disclosed herein.
Figure 3 shows a system according to an embodiment disclosed herein.
Figure 4 shows a fuel cell power system according to an embodiment disclosed herein.
Figure 5 shows power signals for a primary load, a fuel cell power system, and an energy storage system in a case where the fuel cell power system follows an entire load cycle of the primary load according to an embodiment disclosed herein.
Figure 6 shows power signals for a primary load, a fuel cell power system, and an energy storage system in a case where the fuel cell power system follows a portion of a load cycle of the primary load according to an embodiment disclosed herein.
Figure 7 shows power signals for a primary load, a fuel cell power system, and an energy storage system in a case where the fuel cell power system follows a portion of a load cycle of the primary load according to another embodiment disclosed herein.
Figure 8 shows power signals for a primary load, a fuel cell power system, and an energy storage system in a case where the fuel cell power system remains at a constant power level according to an embodiment disclosed herein.
Figures 9, 9A, and 9B show a method of managing the power balance of a system according to an embodiment disclosed herein.

### DETAILED DESCRIPTION

In the following description, certain specific details are set forth to provide a thorough understanding of various aspects of the disclosed subject matter. However, the disclosed subject matter may be practiced without these specific details. In some instances, well-known structures, functions, and methods of manufacturing of electronic devices, electronic components, and power systems have not been described in detail to avoid obscuring the descriptions of other aspects of the present disclosure.

Unless the context requires otherwise, throughout the specification and claims that follow, the word "comprise" and variations thereof, such as "comprises" and "comprising," are to be construed in an open, inclusive sense, that is, as "including, but not limited to."

Reference throughout the specification to "one embodiment" or "an embodiment" means that a particular feature, structure, or characteristic described in connection with the embodiment is included in at least one embodiment. Thus, the appearance of the phrases "in one embodiment" or "in an embodiment" in various places throughout the specification are not necessarily all referring to the same aspect. Furthermore, the particular features, structures, or characteristics may be combined in any suitable manner in one or more aspects of the present disclosure.

As discussed above, fuel cell systems can provide efficient, clean, and continuous power, and are a desirable choice for various applications. However, power consumption profiles of many applications can present challenges for fuel cell systems. Fuel cell systems, especially high-temperature technology-based ones (*e.g.,* SOFC systems), easily handle base loads of applications, but can struggle with rapid changes in loads, such as frequent and fast changing loads, and extended multi-day stand-by times. For example, SOFC systems may not be able to adjust their power level to meet a change in load within a desired period of time. Further, frequent and fast changing loads can degrade and shorten the life of the fuel cell systems.

An AI model comprises both a set of selected algorithms and the data used to train those algorithms for the purpose of allowing the algorithms to make the most accurate predictions. The algorithms can be considered equations with undefined coefficients. The AI model comes into fruition when the algorithms digest data sets to determine the best fit coefficient values, thus creating a model for predictions. Thus, AI model training refers to the process of supplying the algorithms with data, examining the results, and modifying the model output to increase accuracy and efficiency. To be useful, AI model algorithms normally process massive amounts of data.

Power consumption profiles of training processes for AI models are particularly challenging for fuel cell systems due to their highly variable loads. Model training processes change between multiple different loads due to training processing, checkpoint processing, software crashes and recoveries, and stand-by states.

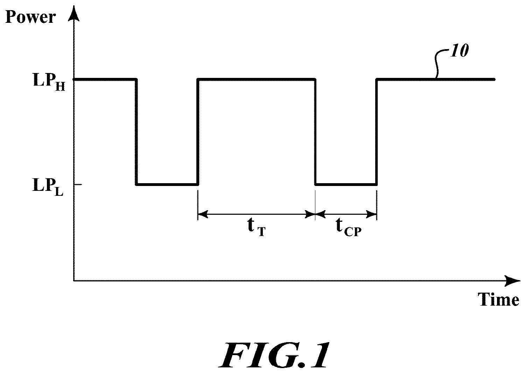

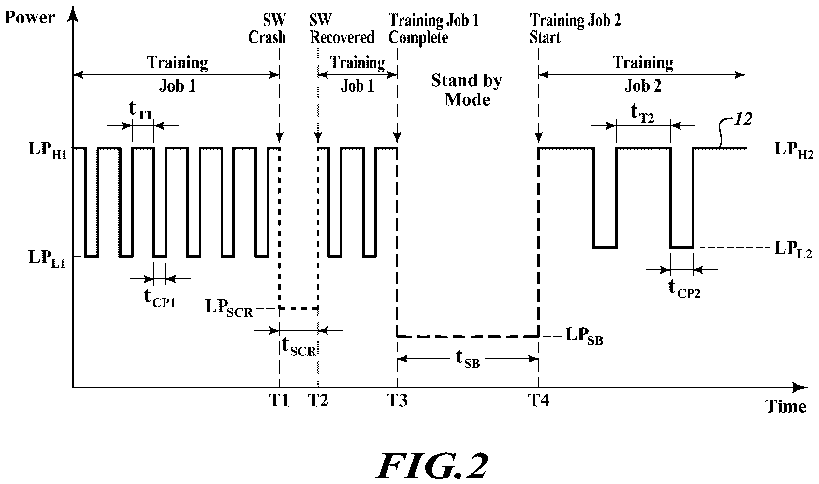

Examples of power consumption profiles during training processing, checkpoint processing, software crashes and recoveries, and stand-by states are explained with respect to Figures 1 and 2 below.

Figure 1 shows a power signal 10 that indicates power consumption during training and checkpoints for a model training process according to an embodiment disclosed herein. The model training process changes between training processing and check point processing.

The vertical axis is an amplitude axis and the horizontal axis is a time axis. The amplitude axis indicates the power level of the power signal 10. The amplitude axis may have any amplitude unit indicating power (*e.g.*, watts, volts, amps, etc.). The time axis may have any time unit indicating time.

The power signal 10 changes between a load power high value LP_{H}, and a load power low value LP_{L}. The load power high value LP_{H} is the power consumption during training processing and has a training duration of t_{T}. The load power low value LP_{L} is the power consumption during checkpoint processing and has a checkpoint duration of t_{CP}.

The power levels of the load power high value LP_{H} and the load power low value LP_{L} depend on the type and size of the model being trained. The ratio of the load power high value LP_{H} to the load power low value LP_{L} may be, for example, between 15% and 25%. The power levels of the load power high value LP_{H} and the load power low value LP_{L} may change over time as well.

The training duration t_{T} and the checkpoint duration t_{CP} also depend on the type and size of the model being trained, as well as the amount of data to be stored during the checkpoint. The training duration t_{T} may be between tens of seconds and tens of minutes. The checkpoint duration t_{CP} may be between a few seconds and a few minutes. The training duration t_{T} and the checkpoint duration t_{CP} may change over time as well.

As can be seen in Figure 1, the power consumption during training processing and checkpoint processing varies significantly, switching between the load power high value LP_{H} and the load power low value LP_{L} with different durations. The power signal 10 increases to the load power high value LP_{H} for training between two consecutive load power low values LP_{L} for checkpoints.

Figure 2 shows a power signal 12 that indicates power consumption during a software crash and recovery, and a stand-by state for a model training process according to an embodiment disclosed herein.

Similar to Figure 1, the vertical axis is an amplitude axis and the horizontal axis is a time axis. The amplitude axis indicates the power level of the power signal 12.

In Figure 2, two training processes are performed: Training Job 1 and Training Job 2. In each of Training Job 1 and Training Job 2, the power signal 12 changes between a load power high value LP_{H} having a training duration of t_{T} and a load power low value LP_{L} having a checkpoint duration of t_{CP}, which are discussed above.

More specifically, in Training Job 1, the power signal 12 changes between a load power high value LP_{H1} having a training duration of t_{T1} and a load power low value LP_{L1} having a checkpoint duration of t_{CP1}. In Training Job 2, the power signal 12 changes between a load power high value LP_{H2} having a training duration of t_{T2} and a load power low value LP_{L2} having a checkpoint duration of t_{CP2}.

The power level values and durations of the power levels may differ between training processes. For example, in Figure 2, the load power low value LP_{L2} for Training Job 2 is higher than the load power low value LP_{L1} for Training Job 1, the training duration of t_{T1} for Training Job 1 is smaller than the training duration of t_{T2} for Training Job 2, and the checkpoint duration of t_{CP1} for Training Job 1 is smaller than the checkpoint duration of t_{CP2} for Training Job 2.

During Training Job 1, the model training process experiences a software crash (*e.g.,* the training process fails and is not performed properly) and performs processing to recover from the software crash (*e.g.*, restarting Training Job 1). When the software crash occurs at time T1, the power level of the power signal 12 drops to a load power software crash recovery value LP_{SCR}, which is lower than the load power low value LP_{L1}, for a software crash recover duration t_{SCR}. The software crash recover duration t_{SCR} is typically longer than checkpoint duration of t_{CP1}. Once the software has recovered at time T2, the power level of the power signal 12 returns to performing training processing for Training Job 1 at the load power high value LP_{H1}.

Training Job 1 completes at time T3, and the model training process enters a stand-by state. The stand-by state is a low power state in which training processing is stopped and minimal to no processing is performed. As a result, at time T3, the power level of the power signal 12 drops to a load power stand-by value LP_{SB}, which is lower than the load power software crash recovery value LP_{SCR}, for a stand-by duration t_{SB}. The stand-by state is exited at time T4, and Training Job 2 then begins.

As can be seen in Figure 2, the power consumption during software crashes, recoveries, and stand-by states exhibit even further variations in power consumption, in addition to the variations due to training processing and checkpoint processing. The power signal 12 suddenly drops to the load power software crash recovery value LP_{SCR} in response to a software crash and returns to the load power high value LP_{H1} upon recovery. Further, power consumption drops again to the load power stand-by value LP_{SB} in response to model training process entering the stand-by state.

The present disclosure is directed to system architectures and control methods that employ fuel cell-based power generation as the primary energy source. The system includes various supporting modules and technologies that cater to the power load demands of various applications, such as large model training data centers. Namely, the system provides a microgrid architecture that combines a fuel cell system as the primary power source with other supporting technologies for energy storage and energy dissipation. The supporting technologies maintain a constant power draw from the fuel cell system, or at least reduce the magnitude of power swings that the fuel cell system experiences.

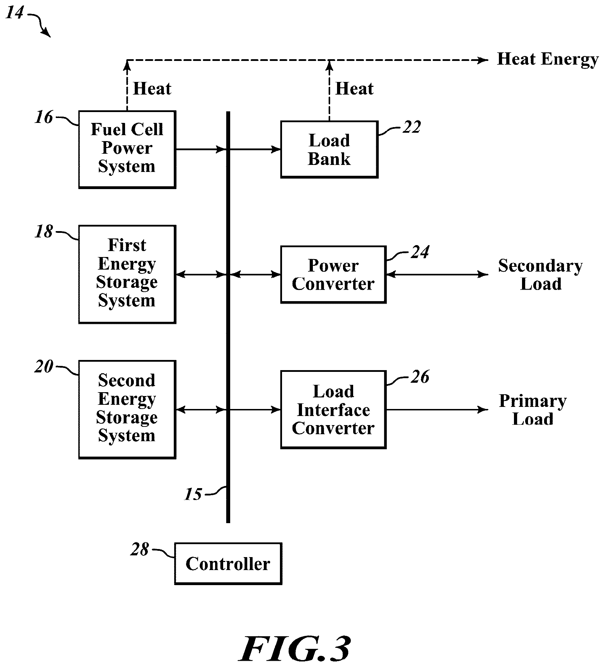

Figure 3 shows a system 14 according to an embodiment disclosed herein. The system 14 provides a fuel cell-based microgrid that caters to processes with highly variable power consumption levels.

The system 14 includes a fuel cell power system 16, a first energy storage system 18, a second energy storage system 20, a load bank 22, a power converter 24, a load interface converter 26, and a controller 28. The fuel cell power system 16, the first energy storage system 18, the second energy storage system 20, the load bank 22, and the load interface converter 26 are coupled to each other by a power bus 15, and communicatively coupled to the controller 28.

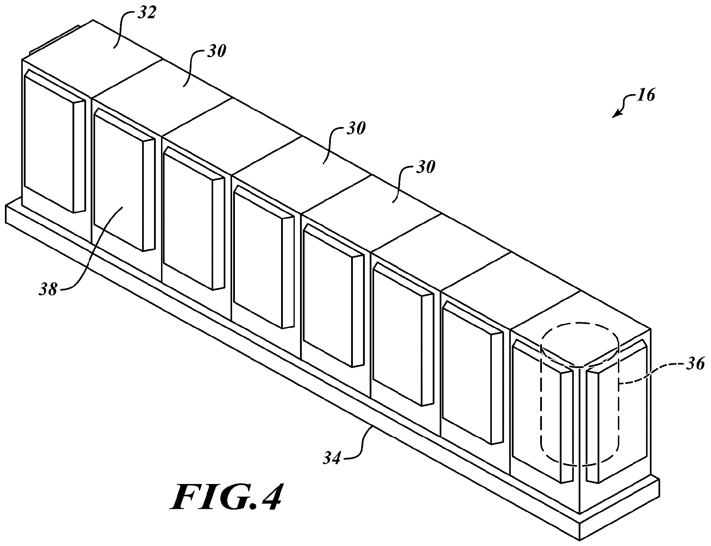

The fuel cell power system 16 includes one or more fuel cell power modules that act as the primary power source for loads connected to the system 14 *(e.g.,* the primary load connected to the load interface converter 26). For example, Figure 4 shows a fuel cell power system 16 according to an embodiment disclosed herein.

In this example, the fuel cell power system 16 is a modular fuel cell power system that provides flexible system installation and operation. Modules allow scaling of installed generating capacity, reliable generation of power, flexibility of fuel processing, and flexibility of power output voltages and frequencies. This design also provides an easy means of scale up to meet specific requirements of customer installations. The modular design also allows the use of available fuels and required voltages and frequencies which may vary by customer and/or by geographic region.

The fuel cell power system 16 includes one or more fuel cell power modules 30 and one or more power conditioning (*i.e.,* electrical output) modules 32. In embodiments, the power conditioning modules 32 are configured to deliver direct current (DC). In alternative embodiments, the power conditioning modules 32 are configured to deliver alternating current (AC). In these embodiments, the power conditioning modules 32 include a mechanism to convert DC to AC, such as an inverter.

In Figure 4, the exemplary fuel cell power system 16 includes a row of seven fuel cell power modules 30 and one power conditioning module 32 disposed on a pad 34. However, the fuel cell power system 16 may include any number of fuel cell power modules and power conditioning modules and any number of rows of modules. For example, the fuel cell power system 16 may include two rows of fuel cell power modules 30 arranged back to back/end to end.

Each of the fuel cell power modules 30 is configured to house one or more hot boxes 36. Each hot box 36 contains one or more stacks or columns of fuel cells, such as one or more stacks or columns of SOFCs comprised of fuel cells (anode, cathode, and electrolyte) separated by conductive interconnect plates.

The fuel cell stacks may include externally and/or internally manifolded stacks. For example, the stacks may be internally manifolded for fuel and air with fuel and air risers extending through openings in the fuel cell layers and/or in the interconnect plates between the fuel cells. Alternatively, the fuel cell stacks may be internally manifolded for fuel and externally manifolded for air, where only the fuel inlet and exhaust risers extend through openings in the fuel cell layers and/or in the interconnect plates between the fuel cells.

The fuel cells may have a cross flow (where oxidant and fuel flow roughly perpendicular to each other on opposite sides of the fuel cells), counter flow parallel (where oxidant and fuel flow roughly parallel to each other but in opposite directions on opposite sides of the fuel cells), or co-flow parallel (where air and fuel flow roughly parallel to each other in the same direction on opposite sides of the fuel cells) configuration.

The power conditioning module 32 may include components for converting the fuel cell stack generated DC power to AC power (*e.g.*, DC/DC and DC/AC converters), electrical connectors for AC power output to the grid, circuits for managing electrical transients, and a system controller (*e.g.,* a computer or dedicated control logic device or circuit). The power conditioning module 32 may be designed to convert DC power from the fuel cell modules to different AC voltages and frequencies. Designs for 208V, 60Hz; 480V, 60Hz; 415V, 50Hz and other common voltages and frequencies may be provided.

The linear array of fuel cell power modules 30 is readily scaled. For example, more or fewer fuel cell power modules 30 may be provided depending on the power needs of the building or other facility serviced by the fuel cell power system 16. The fuel cell power modules 30 and input/output modules may also be provided in other ratios. For example, in other exemplary embodiments, more or fewer fuel cell power modules 30 may be provided.

The fuel cell power system 16 is configured in a way to ease servicing of the components of the fuel cell power system 16.

For example, the fuel cell power system 16 may include access doors 38. All of the routinely or high serviced components, such as the consumable components, may also be placed in a single module to reduce amount of time required for service operations.

As another example, when one fuel cell power module 30 is taken offline (*i.e.,* no power is generated by the stacks in the hot box 36 in the offline fuel cell power module 30), the remaining fuel cell power modules 30 and the power conditioning module 32 are not taken offline. Furthermore, the fuel cell power system 16 may contain more than one of each type of module 30, 32. When at least one module of a particular type is taken offline, the remaining modules of the same type are not taken offline. Thus, in a system including a plurality of modules, each of the modules 30 or 32 may be electrically disconnected, removed from the fuel cell power system 16 and/or serviced or repaired without stopping an operation of the other modules in the system, allowing the fuel cell power system 16 to continue to generate electricity. The entire fuel cell power system 16 does not have to be shut down if one stack of fuel cells in one hot box 36 malfunctions or is taken offline for servicing. Moreover, the fuel cell system 16 can include redundant modules that can be brought on-line when other modules are being serviced or replaced.

Returning to Figure 3, the first energy storage system 18 and the second energy storage system 20 are energy or power storage systems that are used to reduce the magnitude of power swings that the fuel cell power system 16 experiences. The first energy storage system 18 and the second energy storage system 20 act as power buffers that store excess power for supply to the power bus 15 when load power (e.g., power consumption of the primary load connected to the load interface converter 26) is lower than an intended power level of the fuel cell power system 16. In addition, the first energy storage system 18 and/or the second energy storage system 20 provide power to the power bus 15 when there is a shortage of power on the power bus 15 (*e.g.,* load power is more than the power output of the fuel cell power system 16). Although two energy storage systems are shown in Figure 3, the system 14 may include any number of energy storage systems. Various operation methods for the first energy storage system 18 and the second energy storage system 20 will be discussed in further detail below.

In one embodiment, the fuel cell power system 16, the first energy storage system 18, and the second energy storage system 20 are integrated at a DC level, thus making the power bus 15 a DC power bus and the system 14 a DC-coupled system.

The types of storage systems that may be used for the first energy storage system 18 and the second energy storage system 20 include, for example, ultracapacitors, supercapacitors, different types of battery technologies, rotary storage systems like flywheels, and thermal storage systems.

The first energy storage system 18 and the second energy storage system 20 are different types of storage systems to achieve optimum performance of the system 14. In one embodiment, the first energy storage system 18 is an energy storage system that stores a low total amount of power, but is able to achieve fast charging and discharging times. In contrast, the second energy storage system 20 is an energy storage system that stores a large total amount of power (*e.g.*, greater than the total amount of power of the first energy storage system 18), but has slow charging and discharging times (*e.g*., slower than the charging and discharging times of the first energy storage system 18). With storage systems with different characteristics, the first energy storage system 18 or the second energy storage system 20 is selected depending on the current power consumption of the primary load. In one embodiment, the first energy storage system 18 is used to supplement the power generated by the fuel cell power system 16 and store excess power generated by the fuel cell power system 16. The second energy storage system 20 is also used to store excess power generated by the fuel cell power system 16 but in cases where the first energy storage system 18 is fully charged (*e.g*., charged to a level greater than a determined threshold value) or where there are large amounts of excess power *(e.g.,* a stand-by state).

The load bank 22 is a controllable load bank that converts excess power on the power bus 15 to heat energy. The amount of power the load bank 22 consumes depends on the excess power available from the fuel cell power system 16 after catering to the primary load connected to the load interface converter 26, as well as the first energy storage system 18 and the second energy storage system 20 at any instant. The heat energy generated by the load bank 22, as well as any heat energy generated by the fuel cell power system 16, may be vented to the surrounding environment or reused for various purposes, such as being captured using combined heat and power (CHP) equipment for heating, ventilation, and air conditioning (HVAC) and other heating loads of a building. The heat generated by the load bank 22 as well as fuel cell power system 16 may be supplied to a steam generator, thermoelectric generator, water heater, absorption chiller, Rankine cycle device, or a combination thereof, or the like. For example, an absorption chiller can use the heat from the load bank 22 and the fuel cell power system 16 to drive a thermodynamic process whereby water is chilled and distributed for HVAC needs. In this manner, absorption chillers can provide needed cooling capability to various industrial facilities (hospitals, universities, hotels, warehouses, manufacturing facilities, etc.) without significantly contributing to peak electric demand. In this particular case, an absorption chiller can be utilized to cool processing systems that are used to train AI models. Alternatively, heat generated from load bank 22 and/or fuel cell power system 16 may be retained in thermal storage units utilizing molten salt, molten silicon, molten aluminum, graphite thermal media, thermochemical materials, phase change materials, and the like. Heat stored in thermal storage media can be discharged to generate electricity when needed through use of a suitable heat engine (*e.g*., steam turbine, thermophotovoltaics, etc.). Electricity generated by the heat engine can be used for multiple purposes (*e.g*., supplying the first energy storage system 18, the second energy storage system 20, or any other load as needed).

The power converter 24 is a bidirectional power converter that connects a secondary load to the power bus 15 (*e.g.,* the power converter 24 is a DC to AC converter in case the system 14 is a DC-coupled system and the secondary load is an AC system). The secondary load is an additional load, such as the utility power grid or another connected microgrid, besides the primary load connected to the load interface converter 26. The fuel cell power system 16 does not act as the primary power source for the secondary load.

The power converter 24 allows the secondary load to act as an energy source and storage in addition to the first energy storage system 18 and the second energy storage system 20. For example, when there is excess power on the power bus 15, the power converter 24 exports the excess power to the secondary load. Conversely, when there is a shortage of power on the power bus 15, the power converter 24 brings power from the secondary load to the power bus 15.

The load interface converter 26 provides power to the primary load. The primary load may be either an AC or a DC type. In case the system 14 is a DC-coupled system and the load is an AC type, the load interface converter 26 will be a DC-AC converter that converts DC power on the power bus 15 to AC power for the primary load. Conversely, in case the system 14 is a DC-coupled system and the primary load is a DC type, the load interface converter 26 will be a DC-DC converter that converts DC power on the power bus 15 to DC voltage used by the primary load.

The primary load connected to the load interface converter 26 is mainly powered by the system 14, more specifically, by the fuel cell power system 16. Stated differently, the primary load receives the majority of its power from the fuel cell power system 16. In one embodiment, the primary load is a data center that performs training processes for AI models. As discussed above with respect to Figures 1 and 2, power consumption profiles of training processes for AI models are particularly challenging for the fuel cell power system 16 due to their highly variable loads, and, thus, would greatly benefit from the system 14. However, the primary load may be any type of load that has variable power consumption besides AI models.

The controller 28 is communicatively coupled to and controls the various functions of the fuel cell power system 16, the first energy storage system 18, the second energy storage system 20, the load bank 22, the power converter 24, and the load interface converter 26. The controller 28 manages the power balance between different generation modules (*e.g*., the fuel cell power system 16), storage modules (*e.g*., the first energy storage system 18 and the second energy storage system 20), and loads (*e.g.,* the load bank 22, the secondary load connected to the power converter 24, the primary load connected to the load interface converter 26) of the system 14 in real time.

The controller 28 continuously measures the current state of charge (SOC) (*e.g.,* current stored charge) of the first energy storage system 18 and the second energy storage system 20; the power output from the fuel cell power system 16, the first energy storage system 18, the second energy storage system 20, and the secondary load to the power bus 15; and the power input to the first energy storage system 18, the second energy storage system 20, the load bank 22, the secondary load, and the primary load from the power bus 15. The controller 28 manages power flows to and from (*e.g.,* sets power levels input to and output from) each of the fuel cell power system 16, the first energy storage system 18, the second energy storage system 20, the load bank 22, the secondary load, and the primary load, based on the measurements by the controller 28. Various operation methods for the controller 28 will be discussed in further detail below.

The controller 28 may be any type of processor, signal processor, or controller that is able to process data; and may include one or more processors. For example, the controller 28 may be an industrial personal computer (PC), a programmable logic controller (PLC), microcontroller, digital signal processor (DSP), field programmable gate arrays (FPGAs), or other similar technologies.

The system 14 provides various levels of support for the fuel cell power system 16 to cater to the continuously varying loads of the primary load (*e.g.,* the data center performing training processes for AI models). The system 14 can be configured to maintain a constant power draw from the fuel cell power system 16, or at least reduce the magnitude of power swings that the fuel cell power system 16 experiences.

In one embodiment, the controller 28 controls the fuel cell power system 16 to follow the entire load cycle of the primary load. The output of the fuel cell power system 16 increases and decreases in power along with the primary load. Further, in cases where the fuel cell power system 16 is unable to ramp up or increase at the same rate as the primary load demands, an energy storage system provides additional energy to supplement the power provided by the fuel cell power system 16. In addition, during training processing, the fuel cell power system 16 provides power greater than the power consumption of the primary load in order to recharge the energy storage system.

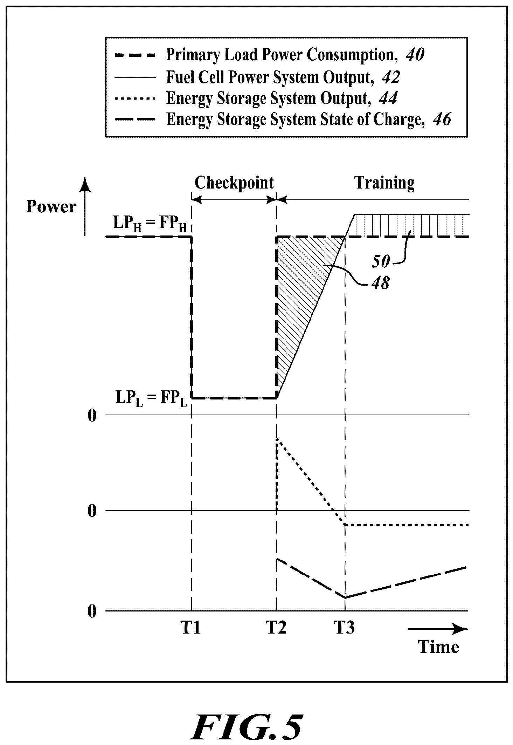

For example, Figure 5 shows power signals for the primary load, the fuel cell power system 16, and an energy storage system in case the fuel cell power system 16 follows an entire load cycle of the primary load according to an embodiment disclosed herein.

A power signal 40 indicates power consumption of the primary load, a power signal 42 indicates the power output of the fuel cell power system 16, a power signal 44 indicates the power output of an energy storage system, and a power signal 46 indicates the SOC of the energy storage system. The vertical axis is an amplitude axis and the horizontal axis is a time axis. Each of the power signals are shown relative to an amplitude value equal to zero.

The energy storage system may be either the first energy storage system 18 or the second energy storage system 20 depending on the desired energy storage system type. In one embodiment, in case the first energy storage system 18 stores a low total amount of power but has fast charging and discharging times and the second energy storage system 20 stores a large total amount of power but has slow charging and discharging times, the energy storage system in Figure 5 is the first energy storage system 18.

The controller 28 controls the fuel cell power system 16 to follow the entire load of the primary load. For example, referring to Figure 5, the controller 28 instructs the fuel cell power system 16 to output power such that the power signal 42, which is the power output of the fuel cell power system 16, follows the power signal 40, which is the power consumption of the primary load. The power signal 40 drops from a load power high value LP_{H} to a load power low value LP_{L} at time T1 and then returns to the load power high value LP_{H} at time T2. Similarly, the power signal 42 is set to drop from a fuel cell power high value FP_{H} to a fuel cell power low value FP_{L} at time T1, and set again to the fuel cell power high value FP_{H} at time T2. The fuel cell power high value FP_{H} is substantially equal to the load power high value LP_{H}, and the fuel cell power low value FP_{L} is substantially equal to the load power low value LP_{L}.

In some cases, the fuel cell power system 16 is unable to ramp up or increase power at the same rate as the primary load demands. Namely, the fuel cell power system 16 increases output power at a slower rate than a power consumption increase rate of the primary load. In this situation, additional energy provided by the energy storage system is used to supplement the power provided by the fuel cell power system 16 during the ramp up period. For example, referring to Figure 5, there is a ramp up period between time T2 and time T3, and the power signal 42, which is the power output of the fuel cell power system 16, is unable to immediately increase to the fuel cell power high value FP_{H}. As such, the controller 28 instructs the energy storage system to output additional power to compensate for the shortcoming of the fuel cell power system 16. Between times T2 and T3, the power signal 44, which is the power output of the energy storage system, is set such that the total output power of the fuel cell power system 16 and the energy storage system is substantially equal to the power consumption of the primary load. Stated differently, between times T2 and T3, the power signal 44 is equal to the difference between the power signal 40 and the power signal 42. The power balance between the primary load, the fuel cell power system 16, and the energy storage system is governed by the following equation: Energy Storage System Output = Primary Load Power Consumption - Fuel Cell Power System Output

It is also possible to use energy provided by the secondary load in place of or in addition to the power provided by the energy storage system, to supplement the power provided by the fuel cell power system 16 during the ramp up period.

As the fuel cell power system 16 ramps up to catch up to the primary load, the output from the energy storage system comes down. The energy storage system stops supplying power to the primary load as soon as the fuel cell power system 16 matches the primary load. For example, referring to Figure 5, as the power signal 42 increases to catch up to the power signal 40 between times T2 and T3, the power signal 44 proportionally decreases. When the power signal 42 reaches the power signal 40 at time T3, the power signal 44 is set to zero.

To recharge the energy storage system after supplying power to the primary load, the fuel cell power system 16 provides power greater than the power consumption of the primary load. The excess power from the fuel cell power system 16 is used to recharge the energy storage system for later use. Stated differently, a portion of the power generated by the fuel cell power system 16 is diverted to the energy storage system. For example, referring to Figure 5, the energy storage system is discharged between times T2 and T3 by an amount indicated by discharge region 48. At time T3, the power signal 42, which is the power output of the fuel cell power system 16, is set higher than the power signal 40, which is the power consumption of the primary load. The additional power indicated by charge region 50 is used to recharge the energy storage system. The discharging of the energy storage system is shown as a positive value in the power signal 44, which is the power output of the energy storage system. The charging of the energy storage system is shown as a negative value in the power signal 44. This is also shown by power signal 46, which is the SOC of the energy storage system. The power signal 46 decreases between times T2 and T3 as the energy storage system is discharged, and starts to increase at time T3 as the energy storage system is recharged by the fuel cell power system 16.

Controlling the fuel cell power system 16 to follow the entire load cycle of the primary load is straightforward to implement. For example, an energy storage system with relatively low capacity may be used because the energy storage system is used to support the fuel cell power system 16 for relatively brief ramp up periods, as fuel cell power systems can take about 60 seconds to ramp up from no load to a full load.

In another embodiment, the controller 28 controls the fuel cell power system 16 to follow a portion of the load cycle of the primary load. The output of the fuel cell power system 16 increases and decreases in power along with the primary load, but is allowed to follow a determined percentage of a load power swing (*i.e.,* a change in power) of the primary load in order to minimize the impact on the life of the fuel cell power system 16. In addition, during checkpoint processing, excess power generated by the fuel cell power system 16 is stored away or dissipated to maintain the power balance on the power bus 15.

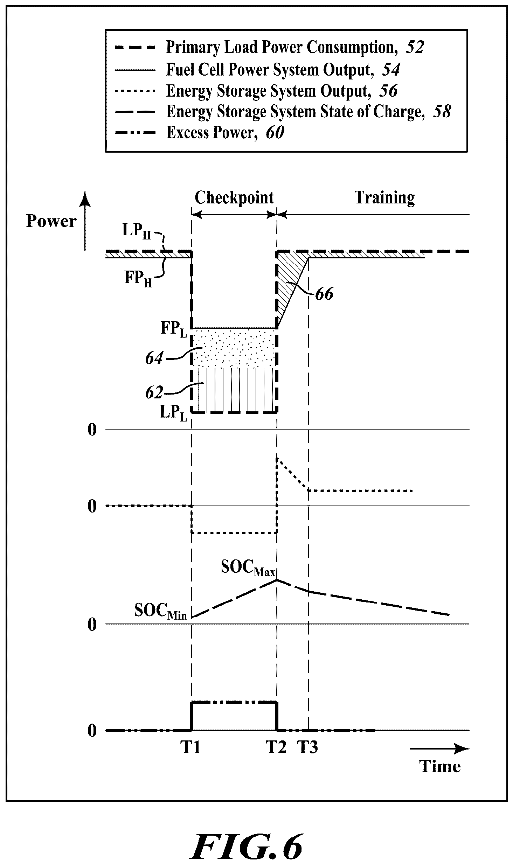

For example, Figure 6 shows power signals for the primary load, the fuel cell power system 16, and the energy storage system in case the fuel cell power system 16 follows a portion of a load cycle of the primary load according to an embodiment disclosed herein.

A power signal 52 indicates power consumption of the primary load connected to the load interface converter 26, a power signal 54 indicates the power output of the fuel cell power system 16, a power signal 56 indicates the power output of the energy storage system, a power signal 58 indicates the SOC of the energy storage system, and a power signal 60 indicates excess power generated by the fuel cell power system 16. The vertical axis is an amplitude axis and the horizontal axis is a time axis. Each of the power signals are shown relative to an amplitude value equal to zero.

As discussed above, the energy storage system may be either the first energy storage system 18 or the second energy storage system 20 depending on the desired energy storage system type. In one embodiment, the energy storage system in Figure 6 is the first energy storage system 18, which stores a low total amount of power but has fast charging and discharging times; and the second energy storage system 20, which stores a large total amount of power but has slow charging and discharging times, is used in addition to the first energy storage system 18 to store excess power when the first energy storage system 18 is fully charged.

The controller 28 controls the fuel cell power system 16 to follow a portion of the load of the primary load. For example, referring to Figure 6, the controller 28 instructs the fuel cell power system 16 to output power such that the power signal 54 follows a determined portion or percentage of a swing of the power signal 52, which is the power consumption of the primary load. The power signal 52 drops from a load power high value LP_{H} to a load power low value LP_{L} at time T1 and then returns to the load power high value LP_{H} at time T2. Similarly, the power signal 54 is set to drop from a fuel cell power high value FP_{H} to a fuel cell power low value FP_{L} at time T1, and set again to the fuel cell power high value FP_{H} at time T2. However, the fuel cell power high value FP_{H} is lower than the load power high value LP_{H}, and the fuel cell power low value FP_{L} is greater than the load power low value LP_{L}.

During checkpoint processing between times T1 and T2, the power signal 52, which is the power consumption of the primary load, is at its lowest value (the load power low value LP_{L}). The power signal 54, which is the power output of the fuel cell power system 16, is set to the fuel cell power low value FP_{L}, which is higher than the load power low value LP_{L}, in order to reduce the drop of the power swing of the fuel cell power system 16, and, thus, minimize the impact on the life of the fuel cell power system 16.

Since the fuel cell power low value FP_{L} is higher than the load power low value LP_{L}, the fuel cell power low value FP_{L} generates excess power (*e.g*., excess power equal to the difference between the fuel cell power low value FP_{L} and the load power low value LP_{L}). The power signal 60 indicates excess power generated by the fuel cell power system 16, and increases to above zero between times T1 and T2. The excess power is either stored away or dissipated to maintain the power balance on the power bus 15, and, thus, keep voltage levels of the power bus 15 within acceptable limits.

The first preference to manage the excess power is to store the excess power in the energy storage system (*e.g*., one or both of the first energy storage system 18 and the second energy storage system 20). The charging of the energy storage system is shown as a negative value in the power signal 56, which is the power output of the energy storage system, between times T1 and T2, as well as the increase in the power signal 58, which is the SOC of the energy storage system, from SOC_{Min} to SOC_{Max} between times T1 and T2. The energy storage system is charged by an amount indicated by charge region 62.

In case the energy storage system is unable to store any more of the excess power (*e.g.,* the first energy storage system 18 is fully charged or experiencing a partial or full failure), the excess power is exported to another energy storage system (*e.g*., the second energy storage system 20).

In case all the energy storage systems are unable to store any more of the excess power, the excess power is then exported to the secondary load through the power converter 24. For example, in case the secondary load is the utility power grid or another connected microgrid, the excess power is converted by the power converter 24 for use by the utility power grid or microgrid.

In case there is still excess power after the energy storage system and the secondary load, the excess power is diverted to the load bank 22 for conversion to heat energy. As discussed above, the heat energy may be vented to the surrounding environment or reused for various purposes, such as being captured using CHP equipment for HVAC and other heating loads of a building. The amount of excess energy dissipated through the secondary load and the load bank 22 is indicated by dissipation region 64.

In case of failure of the load bank 22, the fuel cell power system 16 may be ramped down to a lower output power.

During training processing prior to time T1 and after time T2, the power signal 52, which is the power consumption of the primary load, is at its highest value (the load power high value LP_{H}). The power signal 54, which is the power output of the fuel cell power system 16, is set to the fuel cell power high value FP_{H}, which is lower than the load power high value LP_{H}, to ensure that the energy storage system is not fully charged and has some capacity to store the excess power from checkpoint processing as discussed above. For example, similar to the embodiment discussed above with respect to Figure 5, the energy storage system is used to supplement the power provided by the fuel cell power system 16 during the ramp up period (*e.g.,* between times T2 and T3 in Figure 6) because the fuel cell power system 16 is unable to ramp up at the same rate as the primary load. However, the energy consumed by the energy storage system during the ramp up period may not completely drain the energy storage system. Consequently, the energy storage system may be unable to take the excess power from the checkpoint processing. To avoid this, the fuel cell power system 16 outputs power lower than the load of the primary load (*e.g.,* the fuel cell power high value FP_{H} is set lower than the load power high value LP_{H}), and the difference between the output power of the fuel cell power system 16 and the load of the primary load is compensated by the energy storage system. As a result, the energy storage system is slightly drained during training processing (*e.g.,* the power signal 56, which is the power output of the energy storage system, is positive) and almost completely drained at a subsequent checkpoint processing (*e.g*., the power signal 58, which is the SOC of the energy storage system, is fully discharged at SOC_{Min}). The energy storage system is discharged by an amount indicated by discharge region 66.

In case the energy storage system is completely drained (*e.g*., reaches SOC_{Min}) during training processing and before reaching checkpoint processing, the controller 28 reduces the amount of power dissipated to the load bank 22 and then to the secondary load. If there is still a deficit in power on the power bus 15 for the primary load, the controller 28 increases the output power of the fuel cell power system 16 to the load power high value LP_{H}.

When transitioning from training processing to checkpoint processing, the load drop of the primary load (*e.g.,* the drop from the load power high value LP_{H} to the load power low value LP_{L} at time T1 in Figure 6) is almost instantaneous. As such, the response time of the energy storage system is critical in order to properly handle excess power generated by the fuel cell power system 16 at the load drop of the primary load. For optimum performance, the energy storage system should have a large amount of storage to store excess power generated by the fuel cell power system 16 and a fast response rate to immediately store the excess power at the load drop. To achieve this, different types of energy storages are used. For example, in one embodiment, the first energy storage system 18 stores a low total amount of power but has fast charging and discharging times, and the second energy storage system 20 stores a large total amount of power but has slow charging and discharging times. The first energy storage system 18, which is capable of fast charging times, is used to handle excess power at the load drop. Once the first energy storage system 18 is fully charged, the second energy storage system 20, which has large capacity, is used to store any remaining excess power.

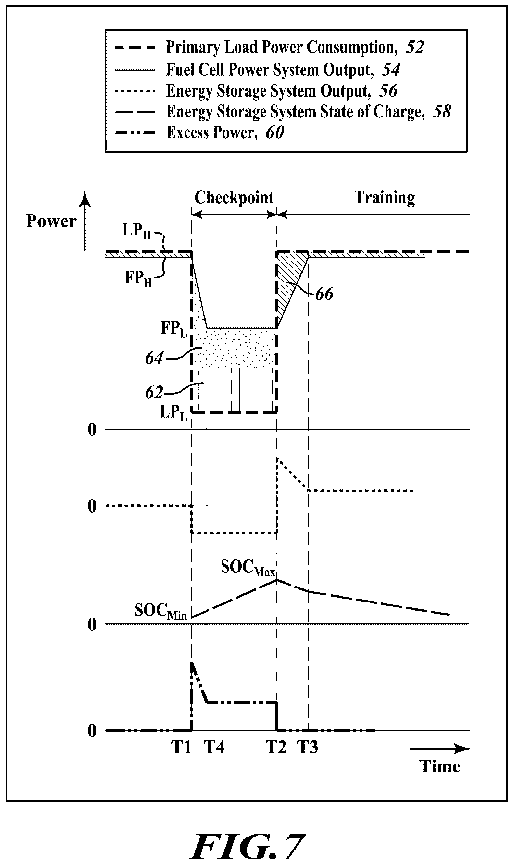

Alternatively, the controller 28 controls the fuel cell power system 16 to follow the load cycle of the primary load as discussed above with respect to Figure 6. However, the output of the fuel cell power system 16 is ramped down instead of immediately dropped. For example, Figure 7 shows power signals for the primary load, the fuel cell power system 16, and the energy storage system in case the fuel cell power system 16 follows a portion of a load cycle of the primary load according to another embodiment disclosed herein.

Figure 7 shows the power signal 52 indicating power consumption of the primary load connected to the load interface converter 26, the power signal 54 indicating the power output of the fuel cell power system 16, the power signal 56 indicating the power output of the energy storage system, the power signal 58 indicating the SOC of the energy storage system, and the power signal 60 indicating excess power generated by the fuel cell power system 16, which are discussed above with respect to Figure 6.

In contrast to the embodiment shown in Figure 6, the controller 28 sets the power signal 54 of the fuel cell power system 16 to ramp down from the fuel cell power high value FP_{H} to the fuel cell power low value FP_{L} between times T1 and T4. The ramp down of the fuel cell power system 16 eases the demand on the energy storage system and allows the energy storage system to have slower charging times. In addition, excess power during the ramp down of the fuel cell power system 16 is diverted to the secondary load and the load bank 22 (shown as dissipation region 64 between times T1 and T4). This approach reduces the overall cost of having multiple different energy storage systems while still improving performance of the fuel cell power system 16.

In another embodiment, the controller 28 controls the fuel cell power system 16 to output a constant power level. The output of the fuel cell power system 16 does not increase or decrease in power along with the primary load, but remains the same.

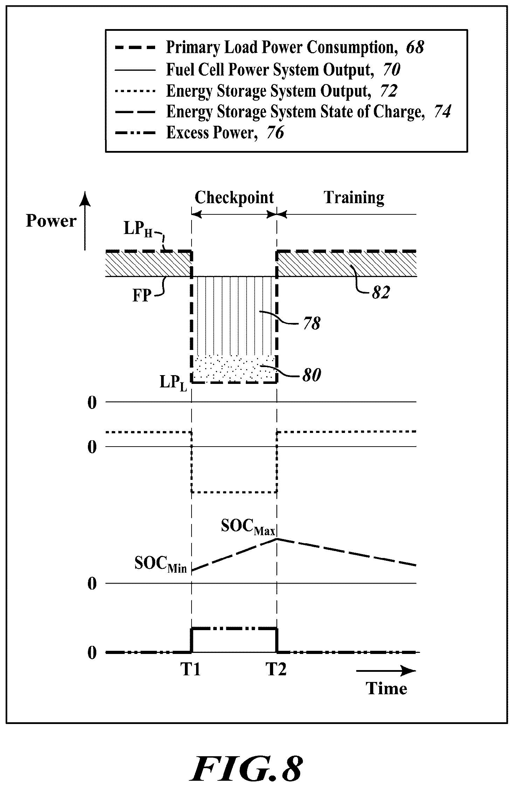

For example, Figure 8 shows power signals for the primary load, the fuel cell power system 16, and the energy storage system in case the fuel cell power system 16 remains at a constant power level according to an embodiment disclosed herein.

A power signal 68 indicates power consumption of the primary load, a power signal 70 indicates the power output of the fuel cell power system 16, a power signal 72 indicates the power output of the energy storage system, a power signal 74 indicates the SOC of the energy storage system, and a power signal 76 indicates excess power generated by the fuel cell power system 16. The vertical axis is an amplitude axis and the horizontal axis is a time axis. Each of the power signals are shown relative to an amplitude value equal to zero.

As discussed above, the energy storage system may be either the first energy storage system 18 or the second energy storage system 20 depending on the desired energy storage system type. In one embodiment, the energy storage system in Figure 8 is the first energy storage system 18, which stores a low total amount of power but has fast charging and discharging times; and the second energy storage system 20, which stores a large total amount of power but has slow charging and discharging times, is used in addition to the first energy storage system 18 to store excess power when the first energy storage system 18 is fully charged.

The operating modes and control sections in this embodiment are similar to that of the embodiment discussed above with respect to Figure 6. For example, excess power is stored to the energy storage system (indicated by charge region 78) and then to the secondary load and the load bank 22 (indicated by dissipation region 80) during checkpoint processing, and the energy storage system is used to supplement the power provided by the fuel cell power system 16 (indicated by discharge region 82) during training processing.

In contrast to the embodiment discussed above with respect to Figure 6, the controller 28 instead controls the fuel cell power system 16 to output a constant power level. For example, referring to Figure 8, the power signal 68, which is the power consumption of the primary load, drops from a load power high value LP_{H} to a load power low value LP_{L} at time T1 and then returns to the load power high value LP_{H} at time T2. Regardless, the controller 28 instructs the fuel cell power system 16 to output power such that the power signal 70 remains at the same level FP. In one embodiment, the fuel cell power system 16 outputs a constant power that is less than the load power high value LP_{H} and greater than the load power low value LP_{L}.

The fuel cell power system 16 does not follow the load power variations of the primary load, and outputs substantially constant average load power within desired limits throughout any change in load of the primary load (*e.g*., checkpoint and training processing). By keeping the fuel cell power system 16 at a substantially constant power output level, the load behavior of the primary load has no impact on the life of the fuel cell power system 16.

As discussed above with respect to Figure 2, model training processes also undergo software crashes and recoveries and stand-by states that cause additional fluctuations in the load. For example, the load decreases significantly when a software crash occurs and increases significantly upon recovering, and decreases to near zero upon the model training entering a stand-by state.

A software crash (and recovery process) is an unplanned event that occurs sporadically. Further, the duration of the recovery could last from seconds to several minutes depending on the cause of the software crash. Consequently, software crashes and recoveries are difficult to manage ahead of time similar to training and checkpoint processing discussed above. As such, during a software crash and recovery process, excess power and output power of the fuel cell power system 16 are dynamically handled. In one embodiment, the controller 28 monitors the power balance between the fuel cell power system 16, the first energy storage system 18, the second energy storage system 20, the load bank 22, the secondary load, and the primary load in real time. In response to detecting excess power on the power bus 15, the controller 28 stores the excess power to the first energy storage system 18 and/or the second energy storage system 20, then directs excess power to the secondary load in case the first energy storage system 18 and/or the second energy storage system 20 are full, and then to the load bank 22 if the system is unable to export power to the secondary load. In case the secondary load and/or load bank are unable to accommodate excess power from fuel cell power system 16 (*e.g.,* due to being full or due to failure), the controller 28 decreases the output power of the fuel cell power system 16 to a lower level as a last resort.

A stand-by state is a planned event, but may last several hours to several days between training jobs. The excess power generated by the fuel cell power system 16 during the stand-by state is stored in the first energy storage system 18 and the second energy storage system 20 when the first energy storage system 18 is fully charged. However, extended durations of the stand-by state may make it unpractical for excess power to be stored in energy storage systems alone. As such, for stand-by states with extended durations, once the first energy storage system 18 and the second energy storage system 20 are fully charged, the controller 28 directs excess power to the secondary load, directs excess power to the load bank 22, decreases the output power of the fuel cell power system 16 to a lower level, or performs a combination thereof.

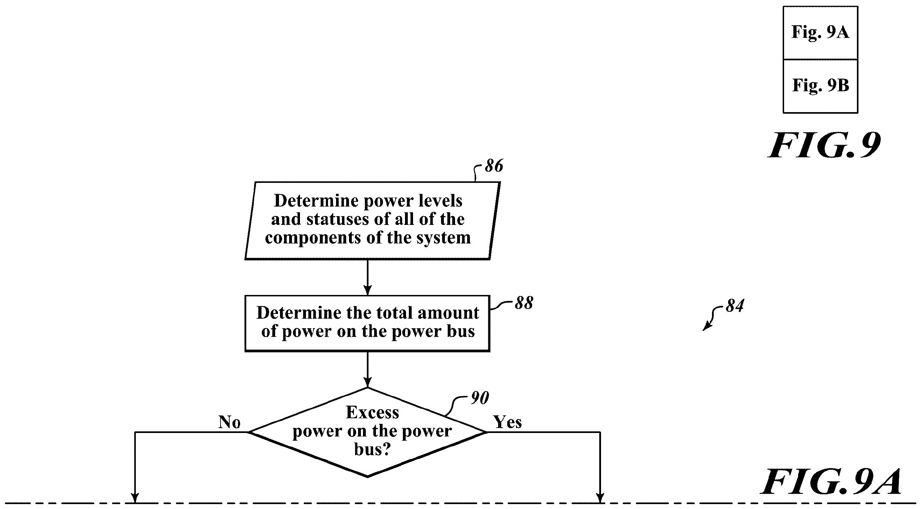

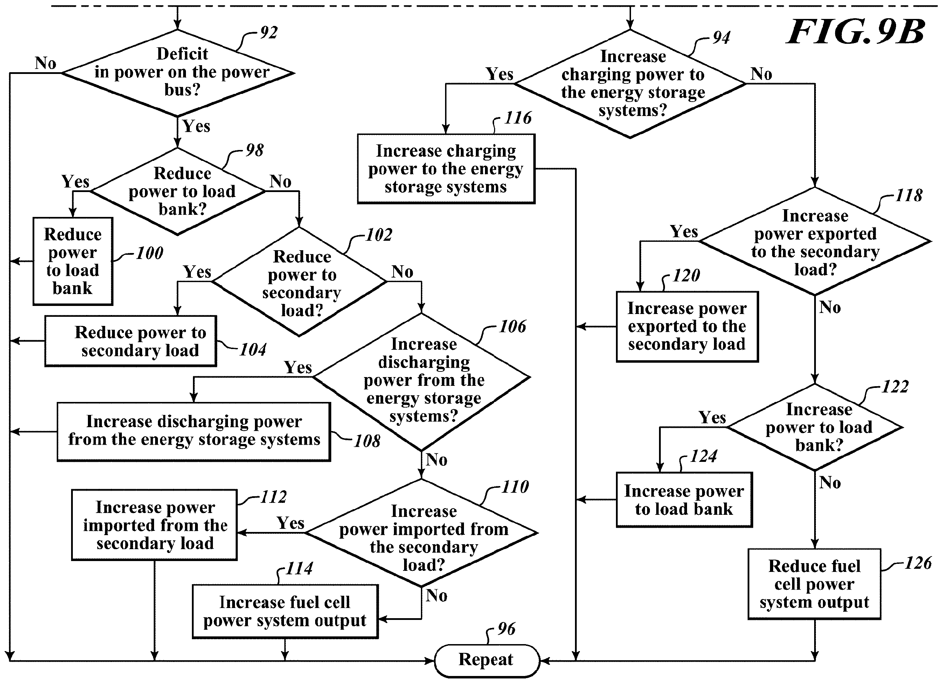

Figures 9, 9A, and 9B show a method 84 of managing the power balance of the system 14 according to an embodiment disclosed herein. The method 84 is performed by the controller 28, which monitors and manages the power balance between the fuel cell power system 16, the first energy storage system 18, the second energy storage system 20, the load bank 22, the secondary load connected to the power converter 24, and the primary load connected to the load interface converter 26.

In block 86, the controller 28 determines powers and statuses of all of the components of the system 14. The controller 28 measures the current SOCs of the first energy storage system 18 and the second energy storage system 20; the power output from the fuel cell power system 16, the first energy storage system 18, the second energy storage system 20, and the secondary load to the power bus 15; and the power provided to the first energy storage system 18, the second energy storage system 20, the load bank 22, the secondary load, and the primary load from the power bus 15.

In block 88, the controller 28 determines the total amount of power on the power bus 15. In one embodiment, the controller 28 determines the total amount of power by adding all incoming power from the fuel cell power system 16, the first energy storage system 18, the second energy storage system 20, and the secondary load; and subtracting all outgoing power to the first energy storage system 18, the second energy storage system 20, the load bank 22, the secondary load, and the primary load.

In block 90, the controller 28 determines or detects if there is excess power on the power bus 15. In one embodiment, the controller 28 determines there is excess power on the power bus 15 in case the total amount of power on the power bus 15 from block 88 is greater than or equal to a determined excess threshold value. In case the controller 28 determines there is not excess power on the power bus 15 (*e.g.,* the total amount of power is less than the excess threshold value), the method 84 moves to block 92. Conversely, in case the controller 28 determines there is excess power on the power bus 15 (*e.g.,* the total amount of power is greater than or equal to the excess threshold value), the method 84 moves to block 94. In one embodiment, the excess threshold value is equal to, greater than, or within a threshold value of a current power consumption of the primary load.

In block 92, the controller 28 determines or detects if there is a deficit in power on the power bus 15. In one embodiment, the controller 28 determines there is a deficit in power on the power bus 15 in case the total amount of power on the power bus 15 from block 88 is less than or equal to a determined deficit threshold value. In case the controller 28 determines there is not a deficit in power on the power bus 15 (*e.g.,* the total amount of power is greater than the deficit threshold value), the method 84 moves to block 96. Conversely, in case the controller 28 determines there is a deficit in power on the power bus 15 (*e.g.,* the total amount of power is less than or equal to the deficit threshold value), the method 84 moves to block 98. In one embodiment, the deficit threshold value is less than a current power consumption of the primary load and less than the excess threshold value.

In block 96, the method 84 is repeated and restarts at block 86.

Blocks 98, 100, 102, 104, 106, 108, 110, 112, and 114 discussed below are performed in order to reduce the deficit in power on the power bus 15.

In block 98, the controller 28 determines if power output to the load bank 22 can be reduced. In one embodiment, the controller 28 determines power output to the load bank 22 can be reduced in case the power output to the load bank 22 is greater than or equal to a determined load bank threshold value. In case the controller 28 determines power output to the load bank 22 can be reduced (*e.g.,* the power output to the load bank 22 is greater than or equal to the load bank threshold value), the method 84 moves to block 100. Conversely, in case the controller 28 determines power output to the load bank 22 cannot be reduced (*e.g.,* the power output to the load bank 22 is less than the load bank threshold value), the method 84 moves to block 102.

In block 100, the controller 28 reduces the power output to the load bank 22 from the power bus 15. As a result, power increases on the power bus 15, and the additional power is used to compensate for the deficit in power. For example, the additional power originally diverted to the load bank 22 is used to provide power to the primary load, charge the first energy storage system 18, charge the second energy storage system 20, or a combination thereof. Once instructions are provided to reduce power to the load bank, the method 84 proceeds to block 96, where the method 84 is repeated and restarts at block 86.

In block 102, the controller 28 determines if power output to the secondary load connected to the power converter 24 can be reduced. As discussed above, the secondary load may be a utility power grid or another connected microgrid capable of both storing, using, and/or generating power. In one embodiment, the controller 28 determines power output to the secondary load can be reduced in case the power output to the secondary load is greater than or equal to a determined secondary load threshold value. In case the controller 28 determines power output to the secondary load can be reduced (*e.g.,* the power output to the secondary load is greater than or equal to the secondary load threshold value), the method 84 moves to block 104. Conversely, in case the controller 28 determines power output to the secondary load cannot be reduced (*e.g.,* the power output to the secondary load is less than the secondary load threshold value), the method 84 moves to block 106.

In block 104, the controller 28 reduces the power output to the secondary load from the power bus 15. As a result, power increases on the power bus 15, and the additional power is used to compensate for the deficit in power. For example, the additional power originally diverted to the secondary load is used to provide power to the primary load, charge the first energy storage system 18, charge the second energy storage system 20, or a combination thereof. Once instructions are provided to reduce power output to the secondary load, the method 84 proceeds to block 96, where the method 84 is repeated and restarts at block 86.

In block 106, the controller 28 determines if the discharging power from the first energy storage system 18 or the second energy storage system 20 can be increased. Stated differently, the controller 28 determines whether additional power can be provided from the first energy storage system 18 or the second energy storage system 20 to the power bus 15. In one embodiment, the controller 28 determines the discharging power from the first energy storage system 18 can be increased in case the SOC of the first energy storage system 18 is greater than or equal to a determined first SOC threshold value, and determines the discharging power from the second energy storage system 20 can be increased in case the SOC of the second energy storage system 20 is greater than or equal to a determined second SOC threshold value. In case the controller 28 determines the discharging power from the first energy storage system 18 or the second energy storage system 20 can be increased (*e.g.*, the SOC is greater than or equal to the corresponding SOC threshold value), the method 84 moves to block 108. Conversely, in case the controller 28 determines the discharging power from the first energy storage system 18 or the second energy storage system 20 cannot be increased (*e.g*., the SOC is less than the corresponding SOC threshold value), the method 84 moves to block 110. The first SOC threshold value and the second SOC threshold value may be equal or different values.

In block 108, the controller 28 increases the discharging power from the first energy storage system 18 to the power bus 15 in response to determining the discharging power from the first energy storage system 18 can be increased, and increases the discharging power from the second energy storage system 20 in response to determining the discharging power from the second energy storage system 20 can be increased. As a result, power increases on the power bus 15, and the additional power is used to compensate for the deficit in power. For example, the additional power is used to provide power to the primary load. Once instructions are provided to increase the discharging power from the first energy storage system 18 and/or the second energy storage system 20, the method 84 proceeds to block 96, where the method 84 is repeated and restarts at block 86.

In block 110, the controller 28 determines if power imported from the secondary load can be increased. Stated differently, the controller 28 determines whether additional power can be provided from the secondary load to the power bus 15. In one embodiment, the controller 28 determines power imported from the secondary load can be increased in case the available power of the secondary load (*e.g.,* the total amount of power stored by the secondary load or the current amount of power being generated by the secondary load) is greater than or equal to a determined available power threshold value. In case the controller 28 determines power imported from the secondary load can be increased (*e.g*., the available power of the secondary load is greater than or equal to the determined available power threshold value), the method 84 moves to block 112. Conversely, in case the controller 28 determines power imported from the secondary load cannot be increased (*e.g.,* the available power of the secondary load is less than the determined available power threshold value), the method 84 moves to block 114.

In block 112, the controller 28 increases the power imported from the secondary load to the power bus 15. As a result, power increases on the power bus 15, and the additional power is used to compensate for the deficit in power. For example, the additional power is used to provide power to the primary load, charge the first energy storage system 18, charge the second energy storage system 20, or a combination thereof. The method 84 then moves to block 96, where the method 84 is repeated and restarts at block 86.

In block 114, the controller 28 increases the power output of the fuel cell power system 16 to the power bus 15 in order to compensate for the deficit on the power bus 15. The additional power is used to provide power to the primary load, charge the first energy storage system 18, charge the second energy storage system 20, or a combination thereof. The method 84 then moves to block 96, where the method 84 is repeated and restarts at block 86.

As a result of blocks 98, 100, 102, 104, 106, 108, 110, 112, and 114, the fuel cell power system 16 is used as a last resort to compensate a deficit in power on the power bus 15. The power output of fuel cell power system 16 is increased in case the deficit cannot be compensated by adjusting powers of the load bank 22, the secondary load, the first energy storage system 18, and the second energy storage system 20. Accordingly, power swings in the output of the fuel cell power system 16 are reduced, and degradation of the life of the fuel cell power system 16 is minimized.

Returning to block 90, as discussed above, the method 84 moves to block 94 in case the controller 28 determines there is excess power on the power bus 15. Blocks 94, 116, 118, 120, 122, 124, and 126 discussed below are performed in order to manage the excess power on the power bus 15.

In block 94, the controller 28 determines if the charging power to the first energy storage system 18 or the second energy storage system 20 can be increased. Stated differently, the controller 28 determines whether additional power can be stored to the first energy storage system 18 or the second energy storage system 20. In one embodiment, the controller 28 determines the charging power to the first energy storage system 18 can be increased in case the SOC of the first energy storage system 18 is less than or equal to a determined first SOC threshold value, and determines the charging power to the second energy storage system 20 can be increased in case the SOC of the second energy storage system 20 is less than or equal to a determined second SOC threshold value. In case the controller 28 determines the charging power to the first energy storage system 18 or the second energy storage system 20 can be increased (*e.g*., the SOC is less than or equal to the corresponding SOC threshold value), the method 84 moves to block 116. Conversely, in case the controller 28 determines the charging power to the first energy storage system 18 or the second energy storage system 20 cannot be increased (*e.g.*, the SOC is greater than the corresponding SOC threshold value), the method 84 moves to block 118. The first SOC threshold value and the second SOC threshold value may be equal or different values.

In block 116, the controller 28 increases the charging power from the power bus 15 to the first energy storage system 18 in response to determining the charging power to the first energy storage system 18 can be increased, and increases the charging power to the second energy storage system 20 in response to determining the charging power to the second energy storage system 20 can be increased. As a result, excess power on the power bus 15 is utilized and diverted to the first energy storage system 18 and/or the second energy storage system 20. As discussed above, the energy stored in the first energy storage system 18 and the second energy storage system 20 is also used to supplement the power provided by the fuel cell power system 16. Once instructions are provided to increase the charging power to the first energy storage system 18 and/or the second energy storage system 20, the method 84 proceeds to block 96, where the method 84 is repeated and restarts at block 86.

In block 118, the controller 28 determines if power exported to the secondary load can be increased. Stated differently, the controller 28 determines whether additional power can be provided to the secondary load from the power bus 15. In one embodiment, the controller 28 determines power exported to the secondary load can be increased in case available power of the secondary load (*e.g.,* the total amount of power stored by the secondary load or the current amount of power being generated by the secondary load) is less than or equal to a determined available power threshold value. In case the controller 28 determines power exported to the secondary load can be increased (*e.g.,* the available power of the secondary load is less than or equal to the determined available power threshold value), the method 84 moves to block 120. Conversely, in case the controller 28 determines power exported to the secondary load cannot be increased (*e.g*., the available power of the secondary load is greater than the determined available power threshold value), the method 84 moves to block 122.

In block 120, the controller 28 increases the power exported from the power bus 15 to the secondary load. As a result, excess power on the power bus 15 is diverted to the secondary load. The energy provided to the secondary load may be later used to supplement the power provided by the fuel cell power system 16 or used by the secondary load for its own processing. Once instructions are provided to increase the power to the secondary load, the method 84 proceeds to block 96, where the method 84 is repeated and restarts at block 86.

In block 122, the controller 28 determines if power output to the load bank 22 from the power bus 15 can be increased. In one embodiment, the controller 28 determines power output to the load bank 22 can be increased in case the power output to the load bank 22 is less than or equal to a determined load bank threshold value. In case the controller 28 determines power output to the load bank 22 can be increased (*e.g*., the power output to the load bank 22 is less than or equal to the load bank threshold value), the method 84 moves to block 124. Conversely, in case the controller 28 determines power output to the load bank 22 cannot be increased (*e.g*., the power output to the load bank 22 is greater than the load bank threshold value), the method 84 moves to block 126.

In block 124, the controller 28 increases the power output from the power bus 15 to the load bank 22. As a result, excess power on the power bus 15 is diverted to the load bank 22. As discussed above, the load bank 22 converts the excess power to heat energy, which may be left to a surrounding environment or captured using CHP equipment for HVAC and other heating loads of a building. The method 84 then moves to block 96, where the method 84 is repeated and restarts at block 86.

In block 126, the controller 28 decreases the power output of the fuel cell power system 16 to the power bus 15 in order to reduce the amount of power on the power bus 15. The method 84 then moves to block 96, where the method 84 is repeated and restarts at block 86.

As a result of blocks 94, 116, 118, 120, 122, 124, and 126, the fuel cell power system 16 is used as a last resort to reduce the excess power on the power bus 15. The power output of fuel cell power system 16 is decreased in case the excess power cannot be reduced by adjusting powers of the load bank 22, the secondary load, the first energy storage system 18, and the second energy storage system 20. Accordingly, power swings in the output of the fuel cell power system 16 are reduced, and degradation on the life of the fuel cell power system 16 is minimized.

The various embodiments disclosed herein provide a system architecture and control methods that employ fuel cell-based power generation as the primary energy source. The system utilizes energy storage systems, load banks, and other types of loads to supplement power output by the fuel cell system, as well as store any excess power generated by the fuel cell system. As a result of the various supporting modules and technologies, swings in the power output by the fuel cell system are minimized and the life of the fuel cell power modules may be extended.

A system may be summarized as including: a fuel cell power system configured to output a first power signal having a first power level to a load having a power consumption level; and a first energy storage system configured to: output a second power signal to the load in case the first power level is less than the power consumption level; and receive a third power signal from the fuel cell power system in case the first power level is greater than the power consumption level.

The load may include processing systems for training artificial intelligence models.

The system may further include: a controller configured to determine the first power level of the first power signal and the power consumption level of the load; and set power levels of the second power signal and the third power signal based on the first power level and the power consumption level.

The system may further include: a load bank configured to convert power generated by the fuel cell power system to heat energy in case the first power level is greater than the power consumption level.

The system may further include: a converter configured to convert power generated by the fuel cell power system to power for a grid external to the system in case the first power level is greater than the power consumption level.

The system may further include: a converter configured to convert power generated by the fuel cell power system to power for the load.

The system may further include: a second energy storage system having slower discharging and charging times than the first energy storage system and greater power capacity than the first energy storage system, the second energy storage system configured to receive a fourth power signal from the fuel cell power system in case the first power level is greater than the power consumption level and the first energy storage system is charged.

The fuel cell power system may include a plurality of power modules, each of the plurality of power modules including a hot box.

Each hot box may include one or more fuel cell stacks.

The one or more fuel cell stacks may include solid oxide fuel cells interleaved with conductive interconnects.

A system may be summarized as including: a fuel cell power system configured to output a first power signal to a load; and an energy storage system configured to: output a second power signal to the load in case a power level of the first power signal is smaller than a power consumption of the load; and store power generated by the fuel cell power system in case the power level of the first power signal is larger than the power consumption of the load.

The load may include processing systems for training one or more artificial intelligence models, the energy storage system may output the second power signal to the load in response to checkpoint processing being performed for the one or more artificial intelligence models, and the energy storage system may store the power generated by the fuel cell power system in response to training processing being performed for the one or more artificial intelligence models.

The fuel cell power system may be configured to: decrease the power level of the first power signal in response to a decrease in the power consumption of the load; and increase the power level of the first power signal in response to an increase in the power consumption of the load.

The energy storage system may output the second power signal in case the power level of the first power signal is increased at a first rate and the power consumption of the load is increased at a second rate faster than the first rate, and a power level of the second power signal may be set based on a difference between power levels of the power consumption of the load and the first power signal.

The energy storage system may store the power generated by the fuel cell power system in case the power level of the first power signal is decreased at a first rate and the power consumption of the load is decreased at a second rate faster than the first rate.

The system may further include: a load bank configured to convert power generated by the fuel cell power system to heat energy in case the power level of the first power signal is larger than the power consumption of the load.

The system may further include: a converter configured to convert power generated by the fuel cell power system to power for a grid external to the system in case the power level of the first power signal is larger than the power consumption of the load.

The first power signal may have a substantially constant power level.

Heat energy generated by the fuel cell power system may be supplied to an absorption chiller to cool processing systems.

Heat energy generated by the load bank, or the fuel cell power system, or both the load bank and the fuel cell power system may be supplied to a steam generator, a thermoelectric generator, a water heater, an absorption chiller, a Rankine cycle device, or a combination thereof.

A method may be summarized as including: determining, by a controller, a total amount of power on a power bus that connects a fuel cell power system, one or more energy storage systems, and a load to each other; detecting, by the controller, a deficit in power on the power bus based on the total amount of power and a power consumption of the load; increasing, by the controller, power on the power bus in response to detecting the deficit; detecting, by the controller, excess power on the power bus based on the total amount of power and the power consumption of the load; and decreasing, by the controller, power on the power bus in response to detecting the excess power.

The load may include processing systems for training an artificial intelligence model.

A load bank, which is configured to convert power to heat energy, may be connected to the power bus, and the increasing of the power on the power bus may include reducing power output to the load bank from the power bus.

An external grid may be connected to the power bus, and the increasing of the power on the power bus may include reducing power output to the external grid from the power bus.

The increasing of the power on the power bus may include increasing power output from the one or more energy storage systems to the power bus.

An external grid may be connected to the power bus, and the increasing of the power on the power bus may include increasing power output from the external grid to the power bus.

The increasing of the power on the power bus may include increasing power output from the fuel cell power system to the power bus.

The decreasing of the power on the power bus may include increasing power output from the power bus to the one or more energy storage systems.

An external grid is connected to the power bus, and the decreasing of the power on the power bus may include increasing power output from the power bus to the external grid.

A load bank, which is configured to convert power to heat energy, may be connected to the power bus, and the decreasing of the power on the power bus may include increasing power output from the power bus to the load bank.

The decreasing of the power on the power bus may include reducing power output from the fuel cell power system to the power bus.

The various embodiments described above can be combined to provide further embodiments. These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled. Accordingly, the claims are not limited by the disclosure.

## Claims

1. A system, comprising:
a fuel cell power system configured to output a first power signal having a first power level to a load having a power consumption level; and
a first energy storage system configured to:
output a second power signal to the load in case the first power level is less than the power consumption level; and
receive a third power signal from the fuel cell power system in case the first power level is greater than the power consumption level.

2. The system of claim 1 wherein the load includes processing systems for training artificial intelligence models.

3. The system of claim 1 or 2, further comprising:
a controller configured to determine the first power level of the first power signal and the power consumption level of the load and set power levels of the second power signal and the third power signal based on the first power level and the power consumption level; and/or
a load bank configured to convert power generated by the fuel cell power system to heat energy in case the first power level is greater than the power consumption level; and/or
a converter configured to convert power generated by the fuel cell power system to power for a grid external to the system in case the first power level is greater than the power consumption level; and/or
a converter configured to convert power generated by the fuel cell power system to power for the load; and/or
a second energy storage system having slower discharging and charging times than the first energy storage system and greater power capacity than the first energy storage system, the second energy storage system configured to receive a fourth power signal from the fuel cell power system in case the first power level is greater than the power consumption level and the first energy storage system is charged.

4. The system of claim 1, 2 or 3, wherein the fuel cell power system includes a plurality of power modules, each of the plurality of power modules including a hot box, optionally wherein each hot box includes one or more fuel cell stacks, further optionally wherein the one or more fuel cell stacks include solid oxide fuel cells interleaved with conductive interconnects.

5. A system, comprising:
a fuel cell power system configured to output a first power signal to a load; and
an energy storage system configured to:
output a second power signal to the load in case a power level of the first power signal is smaller than a power consumption of the load; and
store power generated by the fuel cell power system in case the power level of the first power signal is larger than the power consumption of the load.

6. The system of claim 5 wherein
the load includes processing systems for training one or more artificial intelligence models,
the energy storage system outputs the second power signal to the load in response to checkpoint processing being performed for the one or more artificial intelligence models, and
the energy storage system stores the power generated by the fuel cell power system in response to training processing being performed for the one or more artificial intelligence models, optionally wherein heat energy generated by the fuel cell power system is supplied to an absorption chiller to cool processing systems.

7. The system of claim 5 or 6 wherein the fuel cell power system is configured to:
decrease the power level of the first power signal in response to a decrease in the power consumption of the load; and increase the power level of the first power signal in response to an increase in the power consumption of the load, optionally wherein
(i) the energy storage system outputs the second power signal in case the power level of the first power signal is increased at a first rate and the power consumption of the load is increased at a second rate faster than the first rate, and a power level of the second power signal is set based on a difference between power levels of the power consumption of the load and the first power signal, and/or
(ii) the energy storage system stores the power generated by the fuel cell power system in case the power level of the first power signal is decreased at a first rate and the power consumption of the load is decreased at a second rate faster than the first rate.

8. The system of claim 5, 6 or 7, further comprising:
a load bank configured to convert power generated by the fuel cell power system to heat energy in case the power level of the first power signal is larger than the power consumption of the load, optionally wherein heat energy generated by the load bank, or the fuel cell power system, or both the load bank and the fuel cell power system is supplied to a steam generator, a thermoelectric generator, a water heater, an absorption chiller, a Rankine cycle device, or a combination thereof.

9. The system of any one of claims 5 to 8, further comprising:
a converter configured to convert power generated by the fuel cell power system to power for a grid external to the system in case the power level of the first power signal is larger than the power consumption of the load.

10. The system of any one of claims 5 to 9, wherein the first power signal has a substantially constant power level.

11. A method, comprising:
determining, by a controller, a total amount of power on a power bus that connects a fuel cell power system, one or more energy storage systems, and a load to each other;
detecting, by the controller, a deficit in power on the power bus based on the total amount of power and a power consumption of the load;
increasing, by the controller, power on the power bus in response to detecting the deficit;
detecting, by the controller, excess power on the power bus based on the total amount of power and the power consumption of the load; and
decreasing, by the controller, power on the power bus in response to detecting the excess power.

12. The method of claim 11, wherein the load includes processing systems for training an artificial intelligence model.

13. The method of claim 11 or 12, wherein
a load bank, which is configured to convert power to heat energy, is connected to the power bus, and the increasing of the power on the power bus includes reducing power output to the load bank from the power bus; and/or
a load bank, which is configured to convert power to heat energy, is connected to the power bus, and the decreasing of the power on the power bus includes increasing power output from the power bus to the load bank.

14. The method of claim 11, 12 or 13, wherein
an external grid is connected to the power bus, and the increasing of the power on the power bus includes reducing power output to the external grid from the power bus; and/or
an external grid is connected to the power bus, and the increasing of the power on the power bus includes increasing power output from the external grid to the power bus; and/or
an external grid is connected to the power bus, and the decreasing of the power on the power bus includes increasing power output from the power bus to the external grid.

15. The method of any one of claims 11 to 14, wherein
the increasing of the power on the power bus includes increasing power output from the one or more energy storage systems to the power bus; and/or
the increasing of the power on the power bus includes increasing power output from the fuel cell power system to the power bus; and/or
wherein the decreasing of the power on the power bus includes increasing power output from the power bus to the one or more energy storage systems; and/or
the decreasing of the power on the power bus includes reducing power output from the fuel cell power system to the power bus.
